# EUROPÄISCHE PATENTANMELDUNG

(11) **EP 3 763 832 A1**
(43) Veröffentlichungstag der Anmeldung: **13.01.2021**
(21) Anmeldenummer: 19184964.5
(22) Anmeldetag: 08.07.2019
(51) Int. Cl.: C21B 13/00, F27D 7/02, F27D 7/06, F27D 15/00

(54) **ABDICHTUNG EINES REDUKTIONSAGGREGATS**

(71) Anmelder: Primetals Technologies Austria GmbH, 4031 Linz (AT)
(72) Erfinder: Millner, Robert, 3382 Loosdorf (AT); Rothberger, Johannes, 4202 Hellmonsödt (AT); Sattler, Hans Thomas, 4040 Linz (AT)
(74) Vertreter: Metals@Linz

(57) **Zusammenfassung**

Gezeigt wird ein Verfahren zur Abdichtung eines Reduktionsaggregats (3), wobei das Reduktionsaggregat (3) eine Produktaustragsvorrichtung (2) aufweist, wobei die Produktaustragsvorrichtung (2) mit Sperrgas (4) versorgt wird und wobei zumindest ein Kompressor (5) zur Lieferung von aufbereitetem Sperrgas (6) zur Produktaustragsvorrichtung (2) vorgesehen ist, wobei erfindungsgemäß zumindest ein Stickstoffgenerator (8) zur Herstellung von reinem Sperrgas (7) vorgesehen ist, und wobei das Sperrgas (4) zum Versorgen der Produktaustragsvorrichtung (2) zusammengesetzt ist aus reinem Sperrgas (7) aus dem zumindest einen Stickstoffgenerator (8) oder aus reinem Sperrgas (7) aus dem zumindest einen Stickstoffgenerator (8) und aus aufbereitetem Sperrgas (6) aus dem zumindest einen Kompressor (5).

Darüber hinaus wird eine Vorrichtung, mit welcher das erfindungsgemäße Verfahren ausgeführt wird, gezeigt.

## Beschreibung

### GEBIET DER ERFINDUNG

Die Erfindung betrifft ein Verfahren zur Abdichtung eines Reduktionsaggregats, wobei das Reduktionsaggregat eine Produktaustragsvorrichtung aufweist, wobei die Produktaustragsvorrichtung mit Sperrgas versorgt wird und wobei zumindest ein Kompressor zur Lieferung von aufbereitetem Sperrgas zur Produktaustragsvorrichtung vorgesehen ist, sowie eine Vorrichtung zur Abdichtung eines Reduktionsaggregats.

### STAND DER TECHNIK

Um aus Metallerzen Metalle zu gewinnen, ist es notwendig, den Sauerstoffanteil in den Erzen zu erniedrigen. Ein Verfahren zur Erniedrigung des Sauerstoffanteils ist die sogenannte Direktreduktion, bei der man ein Reduktionsgas in einem Reduktionsaggregat auf das feste Metallerz einwirken lässt. Das feste Produkt der Direktreduktion wird aus dem Reduktionsaggregat ausgetragen und kann auf verschiedene Weisen weiterverarbeitet werden - beispielsweise wird es oft heiß kompaktiert, beispielsweise brikettiert, um es leichter handhabbar zu machen und seine spezifische Oberfläche zu vermindern, damit Ablauf von Rückoxidation, beispielsweise durch Reaktion mit Luftsauerstoff oder H₂O - beispielsweise als Wasserdampf -, erschwert wird. Es ist aber auch bekannt, es ohne Kompaktierung in anderen Aggregaten weiterzuverarbeiten. Das Reduktionsaggregat, in dem die Direktreduktion abläuft, ist oft ein sogenannter Reduktionsschacht.

Grundsätzlich ist es vorteilhaft, das Produkt zwischen Austrag aus dem Reduktionsaggregat und nachfolgenden Vorrichtungen - beispielsweise solchen, in denen die Brikettierung abläuft - vor Rückoxidation zu schützen, indem es unter bezüglich Oxidation reaktionsträgem Gas gehandhabt wird.

Besonders dann, wenn das Reduktionsgas im Reduktionsaggregat unter einem Überdruck steht, muss dafür gesorgt werden, dass beim Entnehmen des Produktes ein gleichzeitiges Entweichen des - in der Regel heißen - Reduktionsgases vermieden wird. Das geschieht beispielsweise dadurch, dass in die Vorrichtung, über die das Produkt aus dem Reduktionsaggregat ausgetragen wird, - in der Folge auch Produktaustragsvorrichtung genannt - ein sogenanntes Sperrgas - auch Seal Gas genannt - eingeführt wird. Das Seal Gas ist bezüglich Reaktion mit dem Produkt reaktionsträge oder inert und steht unter einem Druck, der etwas über Druck des Reduktionsgases liegt, um praktisch eine Barriere für das Entweichen des Reduktionsgases zu bilden.

Im Falle von Eisenerzen wird das Produkt der Direktreduktion beispielsweise Direct Reduced Iron DRI beziehungsweise HDRI Hot Direct Reduced Iron, oder sponge iron, oder Eisenschwamm genannt.

Zur Abdichtung, das heißt zur Verhinderung des Austretens von heißem Reduktionsgas aus dem Reduktionsschacht, wird reaktionsträges Sperrgas verwendet, welches auch oft Bottom Seal Gas (BSG) genannt wird, da es das untere Ende des Reduktionsschachtes abdichten soll. Dies wird beispielsweise in den Veröffentlichungen WO2008123962A1 und US4188022A gezeigt. Man spricht davon, die Produktaustragsvorrichtung mit dem Sperrgas zu versorgen oder zu spülen. Bei einer Direktreduktionsanlage wird als Sperrgas oft getrocknetes Rauchgas aus einem Reformer einer Direktreduktionsanlage verwendet, welches größtenteils Stickstoff und Kohlendioxid und aber zu geringeren Anteilen H2O und Sauerstoff enthält und entsprechend bezüglich Oxidation von HDRI reaktionsträge ist. Dennoch kommt es zu Rückoxidationen mit dem heißen Metall, insbesondere Eisen, durch das enthaltene Kohlendioxid, den Wasserdampf und den Restsauerstoff. Durch diesen Effekt sinken der Kohlenstoffgehalt und die Metallisierung und es entstehen gasförmige Emissionen.

Im Stand der Technik wird bei Direktreduktionsanlagen das untere Ende des Reduktionsschachtes, häufig auch als das Bottom Seal Leg bezeichnet, des HDRI Materialaustragssystems mit getrocknetem Sperrgas versorgt.

Auf Grund des Umstandes, dass beim Verwenden von Sperrgas, das etwa Kohlendioxid und Wasserdampf und Restsauerstoff enthält, es zu Rückoxidationen mit dem heißen Eisen kommen kann, ist es im Stand der Technik daher auch durchaus üblich, große Stickstoffgeneratoren auf Basis kryogener Luftzerlegung zu verwenden, um technisch reinen Stickstoff oder ein anderes reaktionsträges oder inertes Gas zum Versorgen des Reduktionsschachtes herstellen zu können. Die Installation beispielsweise einer kryogenen Luftzerlegungsanlage oder aber auch eines großen Stickstoffgenerators auf Basis von PSA oder Membrantechnologie zur Erzeugung von Stickstoff aus der Luft führt jedoch zu hohen Investitionskosten.

### AUFGABE DER ERFINDUNG

Aufgabe der vorliegenden Erfindung ist es ein Verfahren sowie eine Vorrichtung zur Abdichtung eines Reduktionsaggregats zur Verfügung zu stellen, dabei aber die Produktion von Stickstoff auf eine möglichst geringe Kapazität zu beschränken.

### DARSTELLUNG DER ERFINDUNG

Die Aufgabe der Erfindung wird durch ein Verfahren zur Abdichtung eines Reduktionsaggregats, wobei das Reduktionsaggregat eine Produktaustragsvorrichtung aufweist, wobei die Produktaustragsvorrichtung mit Sperrgas versorgt wird und wobei zumindest ein Kompressor zur Lieferung von aufbereitetem Sperrgas zur Produktaustragsvorrichtung vorgesehen ist, gelöst, wobei erfindungsgemäß vorgesehen ist, dass zumindest ein Stickstoffgenerator zur Herstellung von reinem Sperrgas vorgesehen ist, wobei das Sperrgas zum Versorgen der Produktaustragsvorrichtung zusammengesetzt ist aus reinem Sperrgas aus dem zumindest einen Stickstoffgenerator oder aus reinem Sperrgas aus dem zumindest einen Stickstoffgenerator und aus aufbereitetem Sperrgas aus dem zumindest einen Kompressor.

Das Reduktionsaggregat, in dem die Direktreduktion abläuft, ist oft ein sogenannter Reduktionsschacht. Es versteht sich jedoch von selbst, dass auch andere geeignete Einrichtungen als Reduktionsaggregat im Sinne der gegenständlichen Erfindung verwendet werden können.

Eine erfindungsgemäße Produktaustragsvorrichtung ermöglicht das Entfernen des reduzierten Materials aus dem Reduktionsaggregat nach dem dort stattfindenden Reduktionsprozess, um es der Weiterverarbeitung oder Weiterverwendung zuführen zu können. Vorzugsweise handelt es sich bei einer Produktaustragsvorrichtung im Sinne der gegenständlichen Erfindung um einen sogenannten Bottom Seal Leg einer Direktreduktionsanlage.

Der Bottom Seal Leg dient im Wesentlichen als dynamische Dichtung für das Reduktionsaggregat. Die Funktion des unteren Dichtungsschenkels besteht darin, die Prozessgase im Reduktionsaggregat zu halten und damit ein Durchbrechen des geschlossenen Reduktions-Kreislaufs der Prozessgase zu verhindern. Durch die Abdichtung des Reduktionsaggregats wird verhindert, dass Prozessgase entweichen, während die Luft bzw. Sauerstoff am Eintritt gehindert und somit die Oxidation des metallisierten Materials verhindert wird. Hierfür fließt ein kleiner Teil des Sperrgases nach oben in das Reduktionsaggregat, um die Produktaustragsvorrichtung nach oben abzudichten, und der Rest des Sperrgases fließt zusammen mit dem Metall aus der Produktaustragsvorrichtung hinaus.

Es versteht sich von selbst, dass die erfindungsgemäße Vorrichtung zur Durchführung des erfindungsgemäßen Verfahrens auch mehr als eine Produktaustragsvorrichtung umfassen kann.

Als "metallisiertes Material oder Metall" im Sinne der gegenständlichen Erfindung wird jegliches Metall verstanden, das mittels Reduktionsreaktion aus Metalloxid hergestellt werden kann, insbesondere jedoch Eisen.

Erfindungsgemäß ist vorgesehen, dass zum Versorgen der Produktaustragsvorrichtung Sperrgas verwendet wird. Als "Sperrgas" im Sinne der gegenständlichen Erfindung kommt sowohl reines Sperrgas als auch ein Gemisch aus reinem Sperrgas und aufbereitetem Sperrgas in Betracht.

Als reines Sperrgas kommt erfindungsgemäß vorzugsweise technisch reiner Stickstoff oder ein Stickstoff/Argon Gemisch in Betracht. Bei technisch reinem Stickstoff bzw. einem Stickstoff/Argon Gemisch ist nicht ausgeschlossen, dass auch Verunreinigungen in geringem Ausmaß von bis zu 4% enthalten sind, etwa beispielsweise 1% Sauerstoff oder sonstige Verunreinigungen.

Als Sperrgas im Sinne der gegenständlichen Erfindung kann jedoch nicht nur reiner Stickstoff heranzogen werden, sondern prinzipiell jedes reaktionsträge bzw. inerte Gas, das zur Anwendung in der gegenständlichen Erfindung geeignet ist.

Als "aufbereitetes Sperrgas" im Sinne der gegenständlichen Erfindung kommt erfindungsgemäß insbesondere von einem Reformer oder einem Reduktionsgasofen aufbereitetes Rauchgas in Betracht. Dieses aufbereitete Rauchgas umfasst größtenteils Stickstoff und Kohlendioxid und zu geringeren Anteilen H2O und Sauerstoff. Selbstverständlich ist nicht ausgeschlossen, dass das erfindungsgemäße aufbereitete Sperrgas noch weitere Verunreinigungen umfasst oder eine andere Zusammensetzung als die oben genannte aufweist oder kein Rauchgas aus dem Reformer ist, sondern aus anderer Quelle bezogen wird.

Erfindungsgemäß ist vorgesehen, dass zumindest ein Kompressor zur Lieferung von aufbereitetem Sperrgas zur Produktaustragsvorrichtung vorgesehen ist, wobei jeglicher im Stand der Technik im Zusammenhang mit dieser Erfindung geeignete Kompressor in Betracht kommt. Durch den zumindest einen Kompressor ist es möglich, neben dem reinen Sperrgas im Sinne der gegenständlichen Erfindung auch aufbereitetes Sperrgas aus dem Reformer oder Reduktionsgasofen zur Produktaustragseinrichtung zu liefern, wobei das aufbereitete Sperrgas im zumindest einen Kompressor zunächst verdichtet und nötigenfalls im Bereich des zumindest einen Kompressors im Kreislauf gefahren wird und erst bei Bedarf an die Produktaustragsvorrichtung geliefert wird.

Ein Reformer oder Reduktionsgasofen im Sinne der gegenständlichen Erfindung ist eine Vorrichtung zur Herstellung von Sperrgas durch katalytische Reformierung von gasförmigen Kohlenwasserstoffen, wie sie im Stand der Technik hinlänglich bekannt ist. Der Reformer oder Reduktionsgasofen dient zur Herstellung von aufbereitetem Sperrgas, das zum Versorgen der Produktaustragsvorrichtung verwendet werden kann und im erfindungsgemäßen Kompressor komprimiert wird.

Es versteht sich von selbst, dass die gegenständliche Erfindung auch mehr als einen, beispielsweise mehrere hintereinander geschaltete Kompressoren umfassen kann.

Um reines Sperrgas im Sinne der gegenständlichen Erfindung aus der Luft herstellen zu können, ist erfindungsgemäß weiters zumindest ein Stickstoffgenerator vorgesehen. Der erfindungsgemäße zumindest eine Stickstoffgenerator kann jeglicher im Stand der Technik bekannte Stickstoffgenerator sein, der dafür geeignet ist, im erfindungsgemäßen Verfahren angewendet zu werden. Vorzugweise handelt es sich dabei aber um Stickstoffgeneratoren basierend auf der dem Fachmann hinlänglich bekannten Pressure Swing Absorption Technologie (PSA) oder der Membrantechnologie.

Es versteht sich von selbst, dass die gegenständliche Erfindung auch mehr als einen Stickstoffgenerator aufweisen kann, beispielsweise mehrere parallelgeschaltete Stickstoffgeneratoren.

Der zumindest eine Stickstoffgenerator gemäß der gegenständlichen Erfindung, insbesondere bei Anwendung einer PSA Anlage, benötigt, um funktionieren zu können, einen gewissen Gegendruck, dies ermöglicht jedoch auch ein Regulieren der Funktion des Verfahrens bzw. der Vorrichtung.

Es ist daher vorgesehen, dass in Richtung des Flusses des reinen Sperrgases gesehen, zumindest ein Druckregelventil bei dem zumindest einen Stickstoffgenerator oder nahe am Stickstoffgenerator lokalisiert ist, um zu verhindern, dass es im zumindest einen Stickstoffgenerator zu einem Druckabfall kommt, wodurch der zumindest eine Stickstoffgenerator Schäden davon tragen würde.

Da reiner Stickstoff zum Versorgen der Produktaustragsvorrichtung aller möglichen Betriebsfälle bis hin zur Abdeckung von kurzzeitigem Spitzenbedarf sehr teuer ist, ist erfindungsgemäß vorgesehen, dass die Produktaustragsvorrichtung nicht nur mit reinem Sperrgas, sondern auch mit einem Gemisch aus reinem Sperrgas aus dem zumindest einen Stickstoffgenerator und aufbereitetem Sperrgas aus dem zumindest einen Kompressor versorgt werden kann. Dies ermöglicht ein Einsparen von Kosten, die notwendig wären, um zumindest einen Stickstoffgenerator mit einer Kapazität für Liefermengen, die in Zeiten des Spitzenverbrauchs benötigt werden, zu verwenden. In Zeiten des Spitzenverbrauchs kann der Verbrauch bis auf das Doppelte ansteigen.

Als Sperrgas wird - wie bereits erwähnt - insbesondere ein reaktionsträges Gas oder Gasgemisch verwendet. Genauso wie durch das Sperrgas das Eintreten von Luft bzw. Sauerstoff in das Reduktionsaggregat verhindert werden soll, soll durch das Verwenden eines möglichst inerten Sperrgases die Rückoxidation des heißen Metalls verhindert werden, da es auch bei Vorhandensein von Kohlendioxid und Wasser, insbesondere als Wasserdampf, mit dem heißen Metall, das etwa eine Temperatur von 500-750°C aufweist, zu Rückoxidationen kommt, die den Kohlenstoffgehalt und/oder den Metallisierungsgrad des Metalls vermindern. Das aufbereitete Sperrgas, das zumeist aus Rauchgas aus einem Reformer oder dem Reduktionsgasofen ist, umfasst zu einem größeren Anteil Kohlendioxid aber auch Wasserdampf und Restsauerstoff. Wenn nun nur das aufbereitete Sperrgas zum Versorgen der Produktaustragsvorrichtung verwendet wird, kommt es naturgemäß in einem bestimmten Ausmaß zu Rückoxidationen des Metalls. Technisch reiner Stickstoff gemäß der vorliegenden Erfindung führt jedoch zu keinen Rückoxidationen mit dem heißen Eisen, wodurch der Kohlenstoffgehalt und/oder Metallisierungsgrad des Eisens weitgehend beibehalten wird. Um die ständige Versorgung für alle möglichen Betriebsfälle mit reinem Sperrgas zu gewährleisten, ist zumindest ein Stickstoffgenerator mit einer viel höheren Kapazität notwendig, als im Normalverbrauch notwendig ist, da bei den Vorrichtungen, die im Stand der Technik bekannt sind, nur derartige Verfahren und Vorrichtungen bekannt sind, in denen reines Sperrgas zum Versorgen der Produktaustragsvorrichtung verwendet wird. Naturgemäß sind die Kosten für den zumindest einen Stickstoffgenerator mit höherer Kapazität zur Herstellung und damit Lieferung von technisch reinem Stickstoff als reinem Sperrgas viel höher als für einen mit geringerer Kapazität.

Die vorliegende Erfindung ermöglicht nunmehr eine dynamische Kombination von reinem Sperrgas mit aufbereitetem Sperrgas, indem ermöglicht wird, neben reinem Sperrgas alleine - und prinzipiell auch aufbereitetem Sperrgas alleine - auch ein Gemisch aus reinem und aufbereitetem Sperrgas als Sperrgas zu verwenden, um die Kosten möglichst gering zu halten.

Um Rückoxidationen des Metalls, insbesondere Eisens, möglichst effizient vorzubeugen, ist in einer Ausführungsform der Erfindung vorgesehen, dass das reine Sperrgas aus technisch reinem Stickstoff oder aus einem Stickstoff/Argon Gemisch besteht. Dabei wird der Stickstoff jeweils aus dem zumindest einen Stickstoffgenerator bezogen.

Um die Kosten für das reaktionsträge Sperrgas möglichst gering zu halten, ist in einer Ausführungsform der Erfindung vorgesehen, dass das aufbereitete Sperrgas aus dem zumindest einen Kompressor Kohlendioxid, Wasserdampf, Stickstoff und Restsauerstoff umfasst, wobei es sich dabei insbesondere um Rauchgas, das mittels Reformer oder einem Reduktionsgasofen hergestellt wurde, handelt.

Um zu gewährleisten, dass es durch die Verwendung von aufbereitetem Sperrgas, das auch Kohlendioxid, Wasserdampf und Restsauerstoff enthält, nicht zu Rückoxidationen und damit zu einer Verminderung des Metallisierungsgrades des zuvor zu Metall reduzierten Metalloxids kommt, ist in einer Ausführungsform der Erfindung vorgesehen, dass das Sperrgas erst bei einem Anstieg einer Liefermenge an reinem Sperrgas über eine maximale Kapazität des zumindest einen Stickstoffgenerators auch aufbereitetes Sperrgas aus dem zumindest einen Kompressor umfasst. Dies trifft auch auf eine erfindungsgemäße Vorrichtung zu, wobei oben Ausgeführtes mittels Regeleinrichtung ausgeführt wird.

Als Regeleinrichtung kann jegliche geeignete Einrichtung verstanden werden, die es ermöglicht, das erfindungsgemäße Verfahren auszuführen. Die Regeleinrichtung kann Messvorrichtungen, z.B. für Druck oder Durchfluss enthalten, weiters Absperreinrichtungen, wie Ventile, Einrichtungen zur Datenübertragung, mit denen Messwerte der Messvorrichtungen ausgelesen und weitergeleitet werden können, und eine Einheit, z.B. ein Rechner, welche Messwerte miteinander verknüpft, Regelvorschriften anwendet und Stellbefehle an die Absperreinrichtungen sendet.

Selbstverständlich ist es möglich, das erfindungsgemäße Verfahren computergesteuert durchzuführen, jedoch ist die Durchführung des erfindungsgemäßen Verfahrens nicht auf eine computergesteuerte Durchführung beschränkt, sondern kommt beispielsweise auch eine Impulssteuerung oder dergleichen zur Steuerung des erfindungsgemäßen Verfahrens in Betracht.

Anders gesagt bedeutet dies, dass die Produktaustragsvorrichtung vordergründig dennoch nur mit reinem Sperrgas versorgt wird und erst bei Anstieg der Liefermenge an reinem Sperrgas über eine zuvor festgelegte maximale Kapazität des zumindest einen Stickstoffgenerators zusätzlich auch aufbereitetes Sperrgas zum Versorgen der Produktaustragsvorrichtung herangezogen wird. Vorteilhaft an dieser Erfindung ist dabei auch, dass selbst wenn - wie im Stand der Technik hinlänglich verwendet - aufbereitetes Sperrgas verwendet wird, dies mit reinem Sperrgas verdünnt wird, wodurch die prozentuell enthaltene Menge an Kohlendioxid und Wasserdampf weiter verdünnt wird, wodurch auch mögliche Rückoxidationen des Metalls vermindert werden.

Im Allgemeinen wird zumindest ein Stickstoffgenerator mit einer bestimmten maximalen Kapazität in die Vorrichtung integriert, der reines Sperrgas zum Versorgen der Produktaustragsvorrichtung herstellt. In den Vorrichtungen bekannt aus dem Stand der Technik ist es notwendig, die maximale Kapazität der Liefermenge an reinem Sperrgas an die Spitzenverbräuche des Verbrauchs an reinem Sperrgas anzupassen. Nachteilig daran ist, dass die Spitzenverbräuche Ausnahme und nicht die Regel sind, wodurch die Installation zumindest eines Stickstoffgenerators mit weitaus höherer Kapazität erforderlich ist, wobei die höhere Kapazität lediglich in Ausnahmefällen tatsächlich erforderlich ist.

Generell wird aber beim Versorgen der Produktaustragsvorrichtung im Normalverbrauch eine relativ konstant große Liefermenge an reinem Sperrgas benötigt und nur in Fällen des Spitzenverbrauchs, etwa wenn es zu einem Materialstau in der Produktausgabevorrichtung kommt, werden größere Mengen an Sperrgas, beispielsweise technisch reinem Stickstoff, benötigt. Ein solcher Stickstoffgenerator ist naturgemäß mit höheren Investitionskosten verbunden.

Um die Menge an verwendeten aufbereitetem Sperrgas möglichst gering zu halten, ist in einer Ausführungsform der Erfindung vorgesehen, dass eine erste Zulieferleitung zur Produktaustragsvorrichtung umfassend ein erstes Regelventil, eine zweite Zulieferleitung zur ersten Zulieferleitung umfassend ein zweites Regelventil, sowie eine Messvorrichtung, insbesondere eine erste Messvorrichtung in der ersten Zulieferleitung und/oder eine zweite Messvorrichtung in der zweiten Zulieferleitung, vorgesehen ist, wobei der Druck gemessen wird und wobei es beim Anstieg der Liefermenge an reinem Sperrgas über die maximale Kapazität des zumindest einen Stickstoffgenerators zu einem Druckabfall in der ersten Zulieferleitung und/oder der zweiten Zulieferleitung kommt, wodurch sich das erste Regelventil in der ersten Zulieferleitung öffnet, um zusätzlich aufbereitetes Sperrgas von dem zumindest einen Kompressor zur Produktaustragsvorrichtung zu liefern. Sobald die Nachfrage wieder im Bereich der maximalen Kapazität bzw. darunter bewegt, schließt sich das erste Regelventil wieder vollständig bzw. teilweise. Dies trifft selbstverständlich auch auf eine erfindungsgemäße Vorrichtung zu, wobei oben Ausgeführtes mittels Regeleinrichtung ausgeführt wird.

Die gegenständliche Erfindung umfasst eine erste Zulieferleitung, die es ermöglicht, sowohl aufbereitetes als auch reines Sperrgas zur Produktaustragsvorrichtung zu liefern. Es versteht sich von selbst, dass es nicht ausgeschlossen ist, dass die erfindungsgemäße Vorrichtung mehr als eine erste Zulieferleitung umfasst.

Bei den erfindungsgemäßen Regelventilen kann es sich um alle geeigneten im Stand der Technik bekannten Regelventile, insbesondere jedoch um Klappenventile, handeln.

Prinzipiell kann in der ersten Zulieferleitung - in Strömungsrichtung gesehen - vor dem ersten Regelventil und näher beim mindestens einem Kompressor (also vor der Einmündung der zweiten Zulieferleitung in die erste Zulieferleitung) auch ein drittes Regelventil vorgesehen sein, welches jedoch zur Regulierung der Versorgung der Produktvorrichtung mit Sperrgas nicht zwingend erforderlich ist. Wenn ein drittes Regelventil vorhanden ist, so öffnet es sich selbstverständlich immer auch, wenn das erste Regelventil geöffnet ist, um die Versorgung der Produktaustragsvorrichtung mit aufbereitetem Sperrgas zu ermöglichen, oder das dritte Regelventil kann immer offen gehalten werden. Das dritte Regelventil nach dem zumindest einen Kompressor ist bei bestehenden Kompressoren meist standardmäßig zur Regelung der Zugabe von aufbereitetem Sperrgas aus dem Kompressor vorgesehen.

Dadurch, dass die Liefermenge an aufbereitetem Sperrgas auf Fälle des Spitzenverbrauchs beschränkt ist und das aufbereitete Sperrgas weiter mit dem reinen Sperrgas verdünnt wird, bleibt die Rückoxidation des Metalls im Allgemeinen sehr gering, da der Normalverbrauch dennoch mit reinen Sperrgas bedient werden kann.

Es ist in einer Ausführungsform eine Messvorrichtung in der ersten Zulieferleitung vorgesehen, die es ermöglicht, eine Änderung des Drucks, insbesondere ein Druckabfall, in der ersten Zulieferleitung zu messen, wodurch sich ein notwendiger Anstieg der Liefermenge über die maximale Kapazität des zumindest einen Stickstoffgenerators feststellen lässt. Die gemessene Druckänderung bewirkt ein Öffnen des ersten Regelventils in der ersten Zulieferleitung, wodurch aufbereitetes Sperrgas vom zumindest einen Kompressor zur Produktaustragsvorrichtung geliefert wird. Es ist vorgesehen, dass dennoch weiterhin reiner Stickstoff mit höchster Kapazität des zumindest einen Stickstoffgenerators geliefert wird, sodass auch bei Lieferung von aufbereitetem Stickstoff die Rückoxidationen sehr gering gehalten werden kann, da sich das aufbereitete Sperrgas mit dem reinen Sperrgas vermischt.

In einer Ausführungsform der Erfindung ist vorgesehen, dass eine erste Zulieferleitung zur Produktaustragsvorrichtung umfassend ein erstes Regelventil, eine zweite Zulieferleitung zur ersten Zulieferleitung umfassend ein zweites Regelventil sowie eine Messvorrichtung, insbesondere eine erste Messvorrichtung in der ersten Zulieferleitung und/oder eine zweite Messvorrichtung in der zweiten Zulieferleitung vorgesehen ist, wobei die Durchflussrate gemessen wird und wobei es beim Anstieg der Liefermenge an reinem Sperrgas über die maximale Kapazität des zumindest einen Stickstoffgenerators zu einer angestiegenen Durchflussrate in der ersten Zulieferleitung und/oder der zweiten Zulieferleitung kommt, wodurch sich das erste Regelventil in der ersten Zulieferleitung öffnet, um zusätzlich aufbereitetes Sperrgas von dem zumindest einen Kompressor zur Produktaustragsvorrichtung zu liefern, um die Menge an verwendeten aufbereitetem Sperrgas möglichst gering zu halten.

Die maximale Durchflussrate wird durch ein zweites Regelventil in der zweiten Zulieferleitung begrenzt. Der gemessene Druckabfall oder der gemessene Anstieg der Durchflussrate bewirkt ein Öffnen des ersten Regelventils in der ersten Zulieferleitung, wodurch aufbereitetes Sperrgas vom zumindest einen Kompressor zur Produktaustragsvorrichtung geliefert wird. Es ist vorgesehen, dass dennoch weiterhin reines Sperrgas mit maximaler Kapazität des zumindest Stickstoffgenerators geliefert wird, sodass auch bei Lieferung von aufbereitetem Sperrgas die Rückoxidationen sehr gering gehalten werden, da sich das aufbereitete Sperrgas mit dem reinen Sperrgas vermischt. Sobald sich die Nachfrage wieder im Bereich der maximalen Kapazität bzw. darunter bewegt, schließt sich das erste Regelventil wieder vollständig bzw. teilweise. Dies trifft selbstverständlich auch auf eine erfindungsgemäße Vorrichtung zu, wobei oben Ausgeführtes mittels Regeleinrichtung ausgeführt wird.

In einer bevorzugten Ausführungsform der Erfindung ist vorgesehen, dass der zumindest eine Kompressor eine Bypassleitung sowie eine dritte Messvorrichtung, vorzugsweise zum Messen des Drucks oder der Durchflussrate, umfasst und wobei sich das erste Regelventil der ersten Zulieferleitung öffnet, wenn die dritte Messvorrichtung misst, dass ein Großteil des aufbereiteten Sperrgases, vorzugsweise das gesamte, nach dem zumindest einen Kompressor über die Bypassleitung auf die Saugseite des zumindest einen Kompressors zurückgeführt wird, wodurch kein Gas aus dem Reformer oder dem Reduktionsgasofen mehr für die Versorgung der Bottom Seal Gas Verbraucher abgenommen wird. Sobald nicht mehr der Großteil bzw. das gesamte Sperrgas nach dem zumindest einen Kompressor über die Bypassleitung in den zumindest einen Kompressor zurückgeführt wird, schließt sich das erste Regelventil und gegebenenfalls das dritte Regelventil wieder vollständig bzw. teilweise. Dies trifft selbstverständlich auch auf eine erfindungsgemäße Vorrichtung zu, wobei oben Ausgeführtes mittels Regeleinrichtung ausgeführt wird.

Es versteht sich von selbst, dass es nicht ausgeschlossen ist, dass bei dem zumindest einen Kompressor mehr als eine Bypassleitung vorgesehen ist.

Wenn eine Bypassleitung vorgesehen ist, kann weiters in der Bypassleitung auch ein viertes Regelventil vorgesehen sein, welches sich schließt, wenn sich das erste und das zweite Regelventil öffnen, damit aufbereitetes Sperrgas zur Produktaustragsvorrichtung geliefert wird. Dieses vierte Regelventil stellt sicher, dass der Austrittsdruck nach dem zumindest einen Kompressor konstant geregelt wird und zumindest ein Teil des aufbereiteten Sperrgases im Kreis geführt wird, während das erste und das zweite Regelventil geöffnet sind. Sobald das erste Regelventil wieder geschlossen wird (weil sich beispielsweise das zweite Regelventil aufgrund einer Reduktion der erforderlichen Gasmenge wieder öffnet), öffnet sich das vierte Regelventil wieder, sodass das aufbereitete Sperrgas wieder von der Druckseite auf die Saugseite des zumindest einen Kompressors zurückgeführt wird.

Vorzugsweise ist eine dritte Messvorrichtung nach dem zumindest einen Kompressor vorgesehen, die den Druck oder die Durchflussrate in der ersten Zulieferleitung misst. Wenn es nun zu einer Veränderung des Drucks oder der Durchflussrate dahingehend kommt, dass das aufbereitete Sperrgas vollständig über die Bypassleitung auf die Saugseite des zumindest Kompressors wieder zurückgeführt wird, so öffnet sich das dritte Regelventil, sodass das Gas über die erste Zulieferleitung weiter zur Produktaustragsvorrichtung geführt wird. Sobald sich der Druck bzw. die Durchflussrate, die von der dritten Messvorrichtung gemessen wird, wieder ändert, schließt sich das erste und/oder dritte Regelventil wieder und die Produktaustragsvorrichtung wird erneut mit reinem Sperrgas versorgt.

Es versteht sich von selbst, dass es nicht ausgeschlossen ist, dass die Vorrichtung weitere Messvorrichtungen zur Messung von Druck und oder Durchfluss umfasst und/oder auch weitere Regelventile in der Vorrichtung vorgesehen sind.

In einer Ausführungsform der Erfindung ist vorgesehen, dass der zumindest eine Stickstoffgenerator ein zweites Regelventil umfasst, wobei das zweite Regelventil die Liefermenge an reinem Sperrgas bei Öffnen des ersten Regelventils in der ersten Zulieferleitung konstant weiter bei der maximalen Kapazität des zumindest einen Stickstoffgenerators hält, um zu verhindern, dass der zumindest eine Stickstoffgenerator durch die erhöhte Liefermenge, die angefordert wird, aufgrund einer hydraulischen Überbeanspruchung geschädigt wird. Dies trifft selbstverständlich auch auf eine erfindungsgemäße Vorrichtung zu, wobei oben Ausgeführtes mittels Regeleinrichtung ausgeführt wird.

Vorzugsweise ist vorgesehen, dass weiters eine zweite Messvorrichtung beim zweiten Regelventil vorgesehen ist, die die Durchflussrate in der zweiten Zulieferleitung nach dem Stickstoffgenerator misst. Wenn die zweite Messvorrichtung einen Anstieg der Durchflussrate registriert, so schließt sich das zweite Regelventil weiter, um zu verhindern, dass die Liefermenge an reinem Sperrgas über die maximale Kapazität des zumindest einen Stickstoffgenerators hinausgeht, um Schäden an dem zumindest einen Stickstoffgenerator selbst zu verhindern. Sobald die Nachfrage wieder im Bereich der maximalen Kapazität bzw. darunter bewegt, öffnet sich das zweite Regelventil wieder vollständig bzw. teilweise.

In einer bevorzugten Ausführungsform der Erfindung ist darüber hinaus vorgesehen, dass es sich bei dem Reduktionsaggregat um eine Direktreduktionsanlage zur Direktreduktion von metalloxidhältigen, bevorzugt eisenoxidhältigen, Einsatzstoffen, zu metallisiertem Material durch Kontakt mit heißem Reduktionsgas handelt, um ein möglichst ökonomisch und ökologisch vorteilhaftes Verfahren zur Verfügung stellen zu können. Dies trifft selbstverständlich auch auf eine erfindungsgemäße Vorrichtung zu.

Selbstverständlich ist die Verwendung anderer geeigneter Verfahren dadurch nicht ausgeschlossen.

Vorzugsweise wird das Verfahren im Zusammenhang mit der Direktreduktion von eisenoxidhältigen Einsatzstoffen angewandt. Dies schließt jedoch die Verwendung mit anderen metalloxidhältigen oder anderen reaktiven Einsatzstoffen nicht aus.

Als heißes Reduktionsgas im Sinne der gegenständlichen Erfindung kommen alle geeigneten Gase in Betracht, die in der Regel überwiegend H2 und CO, aber auch H2O, CO2, CH4 und N2 enthalten.

Die oben genannte Aufgabe wird des Weiteren durch eine erfindungsgemäße Vorrichtung zur Abdichtung eines Reduktionsaggregats gelöst, wobei das Reduktionsaggregat eine Produktaustragsvorrichtung aufweist, wobei weiters zumindest ein Kompressor zur Lieferung von aufbereitetem Sperrgas zur Produktaustragsvorrichtung über eine erste Zulieferleitung, die erste Zulieferleitung zur Produktaustragsvorrichtung umfassend ein erstes Regelventil, wobei erfindungsgemäß vorgesehen ist, dass die Vorrichtung weiters zumindest einen Stickstoffgenerator zur Herstellung von reinem Sperrgas umfasst, der zumindest eine Stickstoffgenerator weiters umfassend eine zweite Zulieferleitung zur ersten Zulieferleitung, die zweite Zulieferleitung zur Lieferung von Sperrgas zum Versorgen der Produktaustragsvorrichtung, die Vorrichtung weiter umfassend eine Regeleinrichtung, die ausgebildet ist, ein erstes Regelventil der ersten Zulieferleitung und ein zweites Regelventil der zweiten Zulieferleitung so zu regeln, dass das Sperrgas zum Versorgen der Produktaustragsvorrichtung zusammengesetzt ist aus reinem Sperrgas aus dem zumindest einen Stickstoffgenerator oder aus reinem Sperrgas aus dem zumindest einen Stickstoffgenerator und aus aufbereitetem Sperrgas aus dem zumindest einen Kompressor, um das erfindungsgemäße Verfahren durchführen zu können, wodurch es zu einem Einsparen der Kosten gegenüber einem Stickstoffgenerator mit höher ausgelegter Kapazität kommt und geringe Herstellungskosten für reines Sperrgas erreicht werden.

Die gegenständliche Erfindung umfasst eine zweite Zulieferleitung, die ein Liefern von reinem Sperrgas zur ersten Zulieferleitung ermöglicht, wobei die zweite Zulieferleitung in die erste Zulieferleitung mündet.

Es versteht sich von selbst, dass es nicht ausgeschlossen ist, dass die gegenständliche Erfindung mehr als eine zweite Zulieferleitung umfasst.

Da das erfindungsgemäße Verfahren auch mit Unterstützung eines Computers ausgeführt werden kann, umfasst die Erfindung des Weiteren ein Computerprogammprodukt, das bei seinem Laden und Ausführen auf einem Computer einer Regeleinrichtung einen Verfahrensablauf entsprechend dem erfindungsgemäßen Verfahren bewirkt. Der Computer der Regeleinrichtung bewirkt eine Arbeitsweise der Regeleinrichtung, sodass das Sperrgas zum Versorgen der Produktaustragsvorrichtung entweder zusammengesetzt ist aus reinem Sperrgas aus dem zumindest einen Stickstoffgenerator oder aus reinem Sperrgas aus dem zumindest einen Stickstoffgenerator und aus aufbereitetem Sperrgas aus dem zumindest einen Kompressor. Der Computer verfügt dabei über die Messdaten von Messvorrichtungen, z.B. für Druck oder Durchfluss, und sendet aufgrund von Regelvorschriften, die in den abhängigen Verfahrensansprüchen dargelegt sind, entsprechende Stellbefehle an Absperreinrichtungen, wie Ventile. Insbesondere sendet der Computer Stellbefehle an das erste Regelventil der ersten Zulieferleitung und an das zweite Regelventil der zweiten Zulieferleitung.

Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor einer Regeleinrichtung geladen werden kann.

### KURZE BESCHREIBUNG DER FIGUREN

Die Erfindung wird nun anhand mehrerer Ausführungsbeispiele näher erläutert. Die Zeichnungen sind beispielhaft und sollen den Erfindungsgedanken zwar darlegen, ihn aber keinesfalls einengen oder gar abschließend wiedergeben.

Dabei zeigt:
Fig. 1 eine schematische Darstellung einer Ausführungsvariante des erfindungsgemäßen Verfahrens
Fig. 2 eine schematische Darstellung des Normalverbrauchs sowie des Spitzenverbrauchs von reinem Sperrgas zum Spülen der Produktaustragsvorrichtung
Fig. 3 eine schematische Darstellung einer weiteren Ausführungsvariante des erfindungsgemäßen Verfahrens

### WEGE ZUR AUSFÜHRUNG DER ERFINDUNG

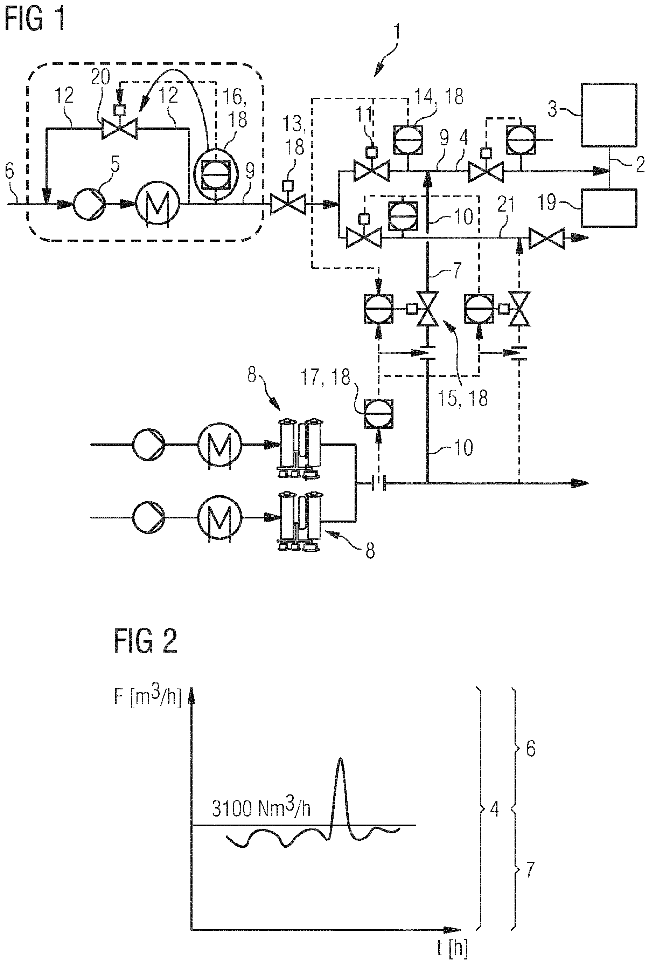

Fig. 1 zeigt schematisch eine erfindungsgemäße Vorrichtung 1 zur Durchführung eines erfindungsgemäßen Verfahrens. Die Vorrichtung 1 zur Abdichtung eines Reduktionsaggregats umfasst ein Reduktionsaggregat 3 mit einer Produktaustragsvorrichtung 2. Zur Lieferung von Sperrgas 4 führt eine erste Zulieferleitung 9 von einem Kompressor 5 zur Produktaustragsvorrichtung 2. Das metallisierte Material gelangt von der Produktaustragsvorrichtung 2 in die Produktaustragskammer 19 und wird von dort der Weiterverarbeitung oder Weiterverwendung zugeführt. Zur Lieferung von reinem Sperrgas führt eine zweite Zulieferleitung 10 von einem Stickstoffgenerator 8 zur ersten Zulieferleitung 9.

Die erste Zulieferleitung 9 umfasst ein erstes Regelventil 11 sowie eine erste Messvorrichtung 14. Die zweite Zulieferleitung umfasst eine zweite Messvorrichtung 17. In Richtung des Flusses des aufbereiteten Sperrgases 6 gesehen mündet die zweite Zulieferleitung 10 nach dem ersten Regelventil 11 in der ersten Zulieferleitung 9.

Der Kompressor 5 umfasst weiters eine Bypassleitung 12, so dass das aufbereitete Sperrgas 6 nach dem Kompressor 5 wieder von der Druckseite auf die Saugseite des Kompressors 5 zurückgeleitet wird.

Die erste Zulieferleitung 9 umfasst weiter ein drittes Regelventil 13, das nach der dritten Messvorrichtung 16 lokalisiert ist. Dieses dritte Regelventil 13 muss nicht zwingend vorhanden sein.

Die Vorrichtung umfasst weiters ein zweites Regelventil 15 sowie eine zweite Messvorrichtung 17, welche den Druck oder die Durchflussrate misst und mittels des zweiten Regelventils 15 steuert, wobei die zweite Messvorrichtung 17 und das zweite Regelventil in der zweiten Zulieferleitung 10 lokalisiert sind.

Im vorliegenden Beispiel weist der Stickstoffgenerator 8 eine maximale Kapazität von 3100 Nm3/h auf. Solange die Kapazität der Liefermenge von reinem Sperrgas 7 unter der maximalen Kapazität des Stickstoffgenerators 8 bleibt, wird reines Sperrgas 7 vom Stickstoffgenerator 8 über die zweite Zulieferleitung 10 in die erste Zulieferleitung 9 und über die erste Zulieferleitung 9 weiter zur Produktaustragsvorrichtung 2 zum Versorgen geliefert. Diesen Falls bleibt das Regelventil 11 vollständig bzw. zum größten Teil geschlossen und die Produktaustragsvorrichtung 2 wird nur mit reinem Sperrgas 7 versorgt. Steigt die Nachfrage an Sperrgas 4 jedoch auf über die maximale Kapazität des Stickstoffgenerators 8, so öffnet sich das erste Regelventil 11 vollständig oder teilweise, so dass die Produktaustragsvorrichtung 2 neben reinem Sperrgas 7 vom Stickstoffgenerator 8 über die zweite Zulieferleitung 10 auch mit aufbereitetem Sperrgas 6 aus dem Kompressor 5 über die erste Zulieferleitung 9 versorgt wird. Sobald sich die Nachfrage wieder im Bereich der maximalen Kapazität bzw. darunter bewegt, schließt sich das zweite Regelventil 15 wieder teilweise. Beim Stickstoffgenerator 8 im gegenständlichen Beispiel handelt es sich um eine PSA Anlage, deren Funktionieren auf einem bestimmten Gegendruck zur Einstellung des Adsorptionsdruckes basiert.

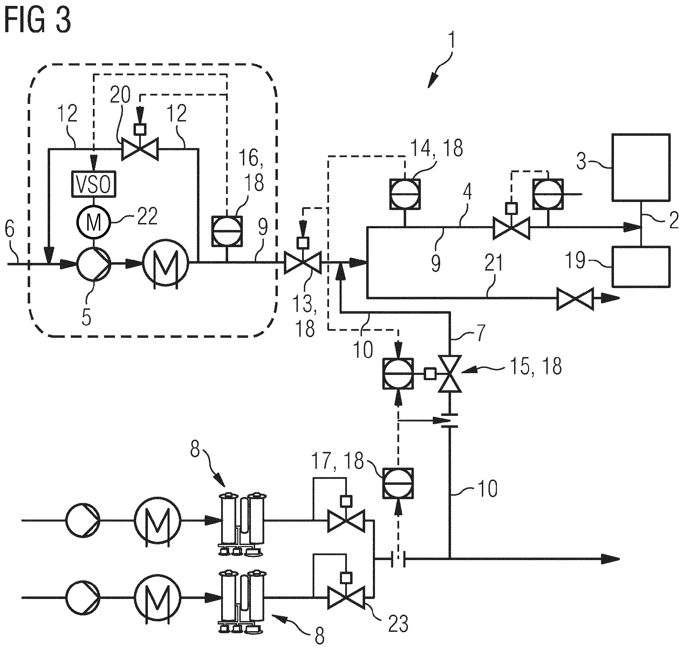

In Flussrichtung des reinen Sperrgases 7 gesehen kann die zweite Zulieferleitung 10 beim Stickstoffgenerator 8 bzw. nahe am Stickstoffgenerator 8 angeordnet ein Druckhalteventil 23 aufweisen, siehe Fig. 3. Das Druckhalteventil 23 hält den Druck konstant bei einem vorher festgelegten Druck, beispielsweise 7 bar, um zu verhindern, dass der Stickstoffgenerator 8 Schäden durch das Vorliegen eines zu geringen Drucks davon trägt.

Die erste Messvorrichtung 14 misst den Druck oder die Durchflussrate in der ersten Zulieferleitung 9, sobald eine Änderung bzw. ein Abfall des Drucks oder ein Anstieg der Durchflussrate registriert wird, die mit einem Übersteigen der maximalen Kapazität des Stickstoffgenerators 8 einhergeht, öffnet sich das erste Regelventil 11, sodass aufbereitetes Sperrgas 6 vom Kompressor 5 über die erste Zulieferleitung 9 zur Produktaustragsvorrichtung 2 geliefert werden kann. Diesen Falls wird dennoch weiter reines Sperrgas 7 mit der maximalen Kapazität geliefert, welches sich in der ersten Zulieferleitung 9 dann mit aufbereitetem Sperrgas 6 vermischt. Es wird daher prinzipiell niemals aufbereitetes Sperrgas 6 alleine an die Produktaustragsvorrichtung 2 geliefert, obwohl dies natürlich auch möglich wäre. Sobald die Nachfrage wieder im Bereich der maximalen Kapazität bzw. darunter bewegt, schließt sich das erste Regelventil 11 wieder vollständig bzw. teilweise.

Liegt der Druck in der ersten Zulieferleitung 9 in Zeiten des Normalverbrauchs nun bei etwa 3 bar und misst die erste Messvorrichtung 14 einen Druckabfall auf beispielsweise 2,9 bar wird das erste Regelventil 11 geöffnet, um aufbereitetes Sperrgas 6 aus dem Kompressor 5 zur Produktaustragsvorrichtung 2 liefern zu können. Sobald die Nachfrage wieder im Bereich der maximalen Kapazität bzw. darunter bewegt, schließt sich das erste Regelventil 11 wieder vollständig bzw. teilweise.

Die zweite Messvorrichtung 17 misst die Durchflussrate in der zweiten Zulieferleitung 10. Sobald die zweite Messvorrichtung 17 einen Anstieg der Durchflussrate über die maximale Kapazität des Stickstoffgenerators 8 feststellt, schließt sich das zweite Regelventil 15 teilweise oder öffnet sich nicht weiter, so dass nur reines Sperrgas auf maximaler Kapazität, aber nicht darüber, zur ersten Zulieferleitung 9 geliefert wird. Dadurch, dass sich das zweite Regelventil 15 nicht vollständig schließt, wird verhindert, dass die Produktaustragsvorrichtung 2 vollständig mit aufbereitetem Sperrgas 6 versorgt wird.

Der Kompressor 5 weist, neben einem nachgeschalteten Kühler, weiters eine Bypassleitung 12 auf, wodurch das aufbereitete Sperrgas 6, das vom Reformer (nicht dargestellt) geliefert wird, von der Druckseite des Kompressors 5 über die Bypassleitung 12 wieder zur Saugseite des Kompressors 5 zurückgeführt wird.

Wenn der Fall eintritt, dass das aufbereitete Sperrgas 6 vollständig über die Bypassleitung 12 wieder zur Saugseite des Kompressors 5 zurückgeführt wird und damit keine Kapazität zur Aufnahme weiteren aufbereiteten Sperrgases 6 besteht, misst die dritte Messvorrichtung 16 eine damit einhergehende Änderung bzw. Abfall des Drucks oder einen Anstieg des Durchflusses, so dass sich das dritte Regelventil 13 und das erste Regelventil 11 öffnen, um aufbereitetes Sperrgas 6 zur Produktaustragsvorrichtung 2 zu liefern. Auch in diesem Fall wird das aufbereitete Sperrgas 6 mit dem reinen Sperrgas 7 in der ersten Zulieferleitung 9 gemischt, so dass prinzipiell kein aufbereitetes Sperrgas 6 alleine zur Produktaustragsvorrichtung 2 geliefert wird.

Der Bypass 12 umfasst ein viertes Regelventil 20, welches sich schließt, wenn sich das dritte Regelventil 13 und das erste Regelventil 11 öffnen, um das aufbereitete Sperrgas 6 zur Produktaustragsvorrichtung 2 zu liefern, wodurch verhindert wird, dass das Gas bzw. ein Teil davon weiter im Kreis geführt wird. Sobald sich das erste Regelventil 11 und das zweite Regelventil 13 wieder schließen, öffnet sich das vierte Regelventil 20 wieder, sodass das aufbereitete Sperrgas 6 wieder von der Druckseite des Kompressors 5 auf die Saugseite des Kompressors 5 zurückgeführt wird.

Alternativ kann der Kompressor 5 auch anstelle des oder ergänzend zum vierten Regelventil 20 einen Frequenzumrichter 22, wie in Fig. 3 dargestellt, umfassen. Wenn die dritte Messvorrichtung 16 eine Änderung d.h. einen Anstieg der Durchflussrate oder ein Absinken des Drucks misst, so wird die Drehzahl des Kompressors 5 vermindert. Sobald sich die Durchflussrate und/der Druck wieder normalisiert, wird die Drehzahl des Kompressors 5 wieder nach oben reguliert.

Ermöglicht wird die Ausführung des erfindungsgemäßen Verfahrens durch eine Regeleinrichtung 18, die in den vorliegenden Figuren nicht komplett dargestellt wird.

Der Sollwert der Messvorrichtung, die auf das zweite Regelventil 15 wirkt, liegt etwas höher, z.B. um 0,1 bar, als der Sollwert der Messvorrichtung, die auf das erste Regelventil 11 bzw. 13 wirkt, um ein Aufschaukeln der Regelung zu verhindern. Z.B. kann in diesem Fall der Sollwert der Messvorrichtung, die auf das zweite Regelventil 15 wirkt, bei 3,1 bar liegen, während der Sollwert der Messvorrichtung, die auf das erste Regelventil 11 bzw. 13 wirkt, bei 3,0 bar liegt.

Fig. 1 zeigt weiters eine dritte Zulieferleitung 21, die es ermöglicht aufbereitetes Sperrgas 6 sowie auch reines Sperrgas 7 an weitere Verbraucher (nicht dargestellt) zu liefern.

Die als strichlierte Linien dargestellten Verbindungen zeigen die Kommunikationswege der Regelungseinrichtung 18, wobei die erfindungsgemäße Vorrichtung zum Ausführen des erfindungsgemäßen Verfahrens noch weitere als die beschriebenen Messvorrichtungen und Regelventile aufweisen kann. Eine parallel zur zweiten Zulieferleitung 10 verlaufende, strichliert dargestellte Leitung ist optional zur Zuführung von reinem Stickstoff in die dritte Zulieferleitung 21 vorgesehen.

Fig. 2 stellt schematisch den Spitzenverbrauch zwischen dem Normalverbrauch von reinem Sperrgas 7 zum Spülen der Produktaustragsvorrichtung 2 dar, wobei im Koordinatensystem die Durchflussrate F gegen die Zeit t aufgetragen ist. Mittels zur x-Achse parallel verlaufender Geraden ist die maximale Kapazität des Stickstoffgenerators 8 dargestellt, die im vorliegenden Beispiel bei 3100 Nm3/h liegt. Aus der Grafik ergibt sich, das sich die Liefermenge an Sperrgas 4 prinzipiell im Bereich unterhalb der maximalen Kapazität des Stickstoffgenerators 8 bewegt und folglich nur vom Stickstoffgenerator 8 bedient wird, wodurch es sich beim Sperrgas 4 um reines Sperrgas 7 handelt. Steigt der Verbrauch an Sperrgas 4 - wie in Fig. 2 durch den hohen Peak dargestellt - über die maximale Kapazität des Stickstoffgenerators 8 an, so wird das Sperrgas nicht mehr nur durch den Stickstoffgenerator 8 alleine geliefert, sondern es wird zusätzlich aufbereitetes Sperrgas 6 aus dem Kompressor zur Produktaustragsvorrichtung 2 geliefert, während der Stickstoffkompressor weiter auf maximaler Kapazität - aber nicht darüber - reines Sperrgas 7 liefert.

Fig. 3 zeigt schematisch eine erfindungsgemäße Vorrichtung zur Durchführung eines erfindungsgemäßen Verfahrens in einer weiteren Ausführungsvariante. Die Vorrichtung zur Abdichtung eines Reduktionsaggregats 1 umfasst ein Reduktionsaggregat 3 mit einer Produktaustragsvorrichtung 2. Zur Lieferung von Sperrgas 4 führt eine erste Zulieferleitung 9 von einem Kompressor 5 zur Produktaustragsvorrichtung 2. Das metallisierte Material gelangt von der Produktaustragsvorrichtung 2 in die Produktaustragskammer 19 und wird von dort der Weiterverarbeitung oder Weiterverwendung zugeführt. Zur Lieferung von reinem Sperrgas führt eine zweite Zulieferleitung 10 von einem Stickstoffgenerator 8 zur ersten Zulieferleitung 9.

Die erste Zulieferleitung 9 umfasst ein drittes Regelventil 13 sowie eine erste Messvorrichtung 14, das erste Regelventil 11 aus Fig. 1 entfällt hier. Die zweite Zulieferleitung umfasst eine zweite Messvorrichtung 17. In Richtung des Flusses des aufbereiteten Sperrgases 6 gesehen, mündet die zweite Zulieferleitung 10 nach dem dritten Regelventil 13 in die erste Zulieferleitung 9, aber vor der ersten Messvorrichtung 14.

Die Vorrichtung umfasst weiters ein zweites Regelventil 15 sowie eine zweite Messvorrichtung 17, welche den Druck oder die Durchflussrate misst und mittels des zweiten Regelventils 15 steuert, wobei die zweite Messvorrichtung 17 und das zweite Regelventil in der zweiten Zulieferleitung 10 lokalisiert sind.

Im vorliegenden Beispiel weist der Stickstoffgenerator 8 eine maximale Kapazität von 3100 Nm3/h auf. Solange die Kapazität der Liefermenge von reinem Sperrgas 7 unter der maximalen Kapazität des Stickstoffgenerators 8 bleibt, wird reines Sperrgas 7 vom Stickstoffgenerator 8 über die zweite Zulieferleitung 10 in die erste Zulieferleitung 9 und über die erste Zulieferleitung 9 weiter zur Produktaustragsvorrichtung 2 zum Versorgen geliefert. Diesen Falls bleibt das Regelventil 13 vollständig bzw. zum größten Teil geschlossen und die Produktaustragsvorrichtung 2 wird nur mit reinem Sperrgas 7 versorgt. Steigt die Nachfrage an Sperrgas 4 jedoch auf über die maximale Kapazität, so öffnet sich das dritte Regelventil 13 vollständig oder teilweise, so dass die Produktaustragsvorrichtung 2 neben reinem Sperrgas 7 vom Stickstoffgenerator 8 über die zweite Zulieferleitung 10 auch mit aufbereitetem Sperrgas 6 aus dem Kompressor 5 über die erste Zulieferleitung 9 versorgt wird. Sobald die Nachfrage wieder im Bereich der maximalen Kapazität bzw. darunter bewegt, schließt sich das dritte Regelventil 13 wieder vollständig bzw. teilweise. Beim Stickstoffgenerator 8 im gegenständlichen Beispiel handelt es sich um eine PSA Anlage, deren Funktionieren auf einem bestimmten Gegendruck zur Einstellung des Adsorptionsdruckes basiert.

In Flussrichtung des reinen Sperrgases 7 gesehen weist die zweite Zulieferleitung 10 beim Stickstoffgenerator 8 bzw. nahe am Stickstoffgenerator 8 angeordnet ein Druckhalteventil 23 auf. Das Druckhalteventil 23 hält den Druck konstant bei einem vorherfestgelegten Druck beispielsweise 7 bar, um zu verhindern, dass der Stickstoffgenerator 8 Schäden durch das Vorliegen eines zu geringen Drucks davon trägt.

Die erste Messvorrichtung 14 misst den Druck oder die Durchflussrate in der ersten Zulieferleitung 9, sobald eine Änderung bzw. ein Abfall des Drucks oder ein Anstieg der Durchflussrate registriert wird, die mit einem Übersteigen der maximalen Kapazität des Stickstoffgenerators 8 einhergeht, öffnet sich das dritte Regelventil 13, sodass aufbereitetes Sperrgas 6 vom Kompressor 5 über die erste Zulieferleitung 9 zur Produktaustragsvorrichtung 2 geliefert werden kann. In diesem Fall wird dennoch weiter reines Sperrgas 7 mit der maximalen Kapazität geliefert, welches sich in der ersten Zulieferleitung 9 dann mit aufbereitetem Sperrgas 6 vermischt. Es wird daher prinzipiell kein aufbereitetes Sperrgas 6 alleine an die Produktaustragsvorrichtung 2 geliefert, obwohl dies natürlich auch möglich wäre. Sobald die Nachfrage wieder im Bereich der maximalen Kapazität bzw. darunter bewegt, schließt sich das dritte Regelventil 13 wieder vollständig bzw. teilweise.

Liegt der Druck in der ersten Zulieferleitung 9 in Zeiten des Normalverbrauchs nun bei etwa 3 bar und misst die erste Messvorrichtung 14 einen Druckabfall auf beispielsweise 2,9 bar, wird das dritte Regelventil 13 geöffnet, um aufbereitetes Sperrgas 6 aus dem Kompressor 5 zur Produktaustragsvorrichtung 2 liefern zu können. Sobald die Nachfrage wieder im Bereich der maximalen Kapazität bzw. darunter bewegt, schließt sich das dritte Regelventil 13 wieder vollständig bzw. teilweise.

Die zweite Messvorrichtung 17 misst die Durchflussrate in der zweiten Zulieferleitung 10. Sobald die zweite Messvorrichtung 17 einen Anstieg der Durchflussrate über die maximale Kapazität des Stickstoffgenerators 8 schließt sich das Regelventil 15 teilweise, so dass nur reines Sperrgas auf maximaler Kapazität, aber nicht darüber, zur ersten Zulieferleitung 9 geliefert wird. Dadurch, dass sich das zweite Regelventil 15 nicht vollständig schließt, wird verhindert, dass die Produktaustragsvorrichtung 2 vollständig mit aufbereitetem Sperrgas 6 versorgt wird.

Der Kompressor 5 weist, neben einem nachgeschalteten Kühler, weiters einen Frequenzumrichter 22 auf, welcher die Leistung des Kompressors reguliert, und eine dritte Messvorrichtung 16, die den Druck und/oder die Durchflussrate misst. Je nach vorliegender Menge an aufbereitetem Sperrgas 6 reguliert der Frequenzumrichter 22 die Drehzahl des Kompressors nach unten oder nach oben. Liegen große Mengen an aufbereitetem Sperrgas 6 am Kompressor 5 vor, so reguliert der Frequenzumrichter 22 die Drehzahl des Kompressors 5 nach unten. Liegen geringe Mengen an aufbereitetem Sperrgas 6 vor, reguliert der Kompressor 5 die Drehzahl des Kompressors nach oben.

Wenn der Fall eintritt, dass der Kompressor 5 keine Kapazität zur Aufnahme weiteren aufbereiteten Sperrgases 6 mehr aufweist und damit auch eine Drosselung der Leistung keine Wirkung mehr zeigt, misst die dritte Messvorrichtung 16 eine damit einhergehende Änderung bzw. Abfall des Drucks oder einen Anstieg des Durchflusses, so dass sich das dritte Regelventil 13 öffnet, um aufbereitetes Sperrgas 6 zur Produktaustragsvorrichtung 2 zu liefern. Auch in diesem Fall wird das aufbereitete Sperrgas 6 mit dem reinen Sperrgas 7 in der ersten Zulieferleitung 9 gemischt, so dass prinzipiell kein aufbereitetes Sperrgas 6 alleine zur Produktaustragsvorrichtung 2 geliefert wird.

Die Vorrichtung umfasst weiters ein zweites Regelventil 15 sowie eine zweite Messvorrichtung 17, welche den Druck oder die Durchflussrate misst und mittels des zweiten Regelventils 15 steuert, wobei die zweite Messvorrichtung 17 und die das zweite Regelventil in der zweiten Zulieferleitung 10 lokalisiert sind.

### BEZUGSZEICHENLISTE

- 1: Vorrichtung zur Abdichtung eines Reduktionsaggregats
- 2: Produktaustragsvorrichtung
- 3: Reduktionsaggregat
- 4: Sperrgas
- 5: Kompressor
- 6: Aufbereitetes Sperrgas
- 7: Reines Sperrgas
- 8: Stickstoffgenerator
- 9: Erste Zulieferleitung
- 10: Zweite Zulieferleitung
- 11: Erstes Regelventil
- 12: Bypassleitung
- 13: Drittes Regelventil
- 14: Erste Messvorrichtung
- 15: Zweites Regelventil
- 16: Dritte Messvorrichtung
- 17: Zweite Messvorrichtung
- 18: Regeleinrichtung
- 19: Produktaustragskammer
- 20: Viertes Regelventil
- 21: dritte Zulieferleitung
- 22: Frequenzumrichter
- 23: Druckhalteventil

## Patentansprüche

1. Verfahren zur Abdichtung eines Reduktionsaggregats (3), wobei das Reduktionsaggregat (3) eine Produktaustragsvorrichtung (2) aufweist, wobei die Produktaustragsvorrichtung (2) mit Sperrgas (4) versorgt wird und wobei zumindest ein Kompressor (5) zur Lieferung von aufbereitetem Sperrgas (6) zur Produktaustragsvorrichtung (2) vorgesehen ist, **dadurch gekennzeichnet, dass** zumindest ein Stickstoffgenerator (8) zur Herstellung von reinem Sperrgas (7) vorgesehen ist, wobei das Sperrgas (4) zum Versorgen der Produktaustragsvorrichtung (2) zusammengesetzt ist aus reinem Sperrgas (7) aus dem zumindest einen Stickstoffgenerator (8) oder aus reinem Sperrgas (7) aus dem zumindest einen Stickstoffgenerator (8) und aus aufbereitetem Sperrgas (6) aus dem zumindest einen Kompressor (5).

2. Verfahren zur Abdichtung eines Reduktionsaggregats (3) gemäß Anspruch 1, **dadurch gekennzeichnet, dass** das reine Sperrgas (7) aus technisch reinem Stickstoff oder aus einem Stickstoff/Argon Gemisch besteht.

3. Verfahren zur Abdichtung eines Reduktionsaggregats (3) gemäß Anspruch 1 oder 2, **dadurch gekennzeichnet, dass** das aufbereitete Sperrgas (6) aus dem zumindest einen Kompressor (5) Kohlendioxid, Wasserdampf, Stickstoff und Restsauerstoff umfasst.

4. Verfahren zur Abdichtung eines Reduktionsaggregats (3) nach einem der vorherigen Ansprüche, **dadurch gekennzeichnet, dass** das Sperrgas (4) erst bei einem Anstieg einer Liefermenge an reinem Sperrgas (7) über eine maximale Kapazität des zumindest einen Stickstoffgenerators (8) auch aufbereitetes Sperrgas (6) aus dem zumindest einen Kompressor (5) umfasst.

5. Verfahren zur Abdichtung eines Reduktionsaggregats (3) nach einem der vorhergehenden Ansprüche, **dadurch gekennzeichnet, dass** eine erste Zulieferleitung (9) zur Produktaustragsvorrichtung (2) umfassend ein erstes Regelventil (11), eine zweite Zulieferleitung (10) zur ersten Zulieferleitung (9) umfassend ein zweites Regelventil (15), sowie eine Messvorrichtung, insbesondere eine erste Messvorrichtung (14) in der ersten Zulieferleitung (9) und/oder eine zweite Messvorrichtung (17) in der zweiten Zulieferleitung (10), vorgesehen ist, wobei der Druck gemessen wird und wobei es beim Anstieg der Liefermenge an reinem Sperrgas (7) über die maximale Kapazität des zumindest einen Stickstoffgenerators (8) zu einem Druckabfall in der ersten Zulieferleitung (9) und/oder der zweiten Zulieferleitung (10) kommt, wodurch sich das erste Regelventil (11) in der ersten Zulieferleitung (9) öffnet, um zusätzlich aufbereitetes Sperrgas (6) von dem zumindest einen Kompressor (5) zur Produktaustragsvorrichtung (2) zu liefern.

6. Verfahren zur Abdichtung eines Reduktionsaggregats (3) nach einem der Ansprüche 1 bis 4, **dadurch gekennzeichnet, dass** eine erste Zulieferleitung (9) zur Produktaustragsvorrichtung (2) umfassend ein erstes Regelventil (11), eine zweite Zulieferleitung (10) zur ersten Zulieferleitung (9) umfassend ein zweites Regelventil (15) sowie eine Messvorrichtung, insbesondere eine erste Messvorrichtung (14) in der ersten Zulieferleitung (9) und/oder eine zweite Messvorrichtung (17) in der zweiten Zulieferleitung (10), vorgesehen ist, wobei die Durchflussrate gemessen wird und wobei es beim Anstieg der Liefermenge an reinem Sperrgas (7) über die maximale Kapazität des zumindest einen Stickstoffgenerators (8) zu einer angestiegenen Durchflussrate in der ersten Zulieferleitung (9) und/oder der zweiten Zulieferleitung (10) kommt, wodurch sich das erste Regelventil (11) in der ersten Zulieferleitung (9) öffnet, um zusätzlich aufbereitetes Sperrgas (6) von dem zumindest einen Kompressor (5) zur Produktaustragsvorrichtung (2) zu liefern.

7. Verfahren zur Abdichtung eines Reduktionsaggregats (3) nach einem der vorhergehenden Ansprüche, **dadurch gekennzeichnet, dass** der zumindest eine Kompressor (5) eine Bypassleitung (12) sowie eine dritte Messvorrichtung (16), vorzugsweise zum Messen des Drucks oder der Durchflussrate, umfasst und wobei sich das erste Regelventil (11) der ersten Zulieferleitung (9) öffnet, wenn die dritte Messvorrichtung (16) misst, dass ein Großteil des aufbereiteten Sperrgases (6), vorzugsweise das gesamte, nach dem zumindest einen Kompressor (5) über die Bypassleitung (12) auf die Saugseite des zumindest einen Kompressors (5) zurückgeführt wird.

8. Verfahren zur Abdichtung eines Reduktionsaggregats (3) nach einem der vorhergehenden Ansprüche, **dadurch gekennzeichnet, dass** der zumindest eine Stickstoffgenerator (8) ein zweites Regelventil (15) umfasst, wobei das zweite Regelventil (15) die Liefermenge an reinem Sperrgas (7) bei Öffnen des ersten Regelventils (11) in der ersten Zulieferleitung (9) konstant weiter bei der maximalen Kapazität des zumindest einen Stickstoffgenerators (8) hält.

9. Verfahren zur Abdichtung eines Reduktionsaggregats (3) nach einem der vorhergehenden Ansprüche, **dadurch gekennzeichnet, dass** es sich bei dem Reduktionsaggregat (3) um eine Direktreduktionsanlage zur Direktreduktion von metalloxidhältigen, bevorzugt eisenoxidhältigen, Einsatzstoffen, zu metallisiertem Material durch Kontakt mit heißem Reduktionsgas handelt.

10. Vorrichtung zur Abdichtung eines Reduktionsaggregats (3), wobei das Reduktionsaggregat (3) eine Produktaustragsvorrichtung (2) aufweist, wobei weiters zumindest ein Kompressor (5) zur Lieferung von aufbereitetem Sperrgas (6) zur Produktaustragsvorrichtung (2) über eine erste Zulieferleitung (9), die erste Zulieferleitung (9) zur Produktaustragsvorrichtung (2) umfassend ein erstes Regelventil (11), vorgesehen ist, **dadurch gekennzeichnet, dass** die Vorrichtung weiters zumindest einen Stickstoffgenerator (8) zur Herstellung von reinem Sperrgas (7) umfasst, der zumindest eine Stickstoffgenerator (8) weiters umfassend eine zweite Zulieferleitung (10) zur ersten Zulieferleitung (9), die zweite Zulieferleitung (10) zur Lieferung von Sperrgas (4) zum Versorgen der Produktaustragsvorrichtung (2), die Vorrichtung weiter umfassend eine Regeleinrichtung (18), die ausgebildet ist, ein erstes Regelventil (11) der ersten Zulieferleitung (9) und ein zweites Regelventil (15) der zweiten Zulieferleitung (10) so zu regeln, dass das Sperrgas (4) zum Versorgen der Produktaustragsvorrichtung (2) zusammengesetzt ist aus reinem Sperrgas (7) aus dem zumindest einen Stickstoffgenerator (8) oder aus reinem Sperrgas (7) aus dem zumindest Stickstoffgenerator (8) und aus aufbereitetem Sperrgas (6) aus dem zumindest einen Kompressor (5).

11. Vorrichtung zur Abdichtung eines Reduktionsaggregats (3) nach Anspruch 10, **dadurch gekennzeichnet, dass** die Regeleinrichtung (18) so ausgebildet ist, dass das Sperrgas (4) erst bei einem Anstieg über die maximale Kapazität des zumindest einen Stickstoffgenerators (8) auch aufbereitetes Sperrgas (6) aus dem zumindest einen Kompressor (5) umfasst.

12. Vorrichtung zur Abdichtung eines Reduktionsaggregats (3) nach einem der vorhergehenden Ansprüche, **dadurch gekennzeichnet, dass** weiters zumindest eine Messvorrichtung (14) zum Messen des Drucks, insbesondere eine erste Messvorrichtung (14) in der ersten Zulieferleitung (9) und/oder eine zweite Messvorrichtung (17) in der zweiten Zulieferleitung (10), vorgesehen ist, wobei die Regeleinrichtung (18) so ausgebildet ist, dass es beim Anstieg der Liefermenge an reinem Sperrgas (7) über die maximale Kapazität des zumindest einen Stickstoffgenerators (8) zu einem verminderten Druck in der ersten Zulieferleitung (9) und/oder der zweiten Zulieferleitung (10) kommt, wodurch sich das erste Regelventil (11) in der ersten Zulieferleitung (9) öffnet, um zusätzlich aufbereitetes Sperrgas (6) von dem zumindest einen Kompressor (5) zur Produktaustragsvorrichtung (2) zu liefern.

13. Vorrichtung zur Abdichtung eines Reduktionsaggregats (3) nach einem der vorhergehenden Ansprüche, **dadurch gekennzeichnet, dass** weiters zumindest eine Messvorrichtung (14) zum Messen der Durchflussrate, insbesondere eine erste Messvorrichtung (14) in der ersten Zulieferleitung (9) und/oder eine zweite Messvorrichtung (17) in der zweiten Zulieferleitung (10), vorgesehen ist und wobei die Regeleinrichtung (18) so ausgebildet ist, dass es beim Anstieg der Liefermenge an reinem Sperrgas (7) über die maximale Kapazität des zumindest einen Stickstoffgenerators (8) zu einer erhöhten Durchflussrate in der ersten Zulieferleitung (9) und/oder der zweiten Zulieferleitung (10) kommt, wodurch sich das erste Regelventil (11) in der ersten Zulieferleitung (9) öffnet, um zusätzlich aufbereitetes Sperrgas (6) von dem zumindest einen Kompressor (5) zur Produktaustragsvorrichtung (2) zu liefern.

14. Vorrichtung zur Abdichtung eines Reduktionsaggregats (3) nach einem der vorhergehenden Ansprüche, **dadurch gekennzeichnet, dass** der zumindest eine Kompressor (5) eine Bypassleitung (12) sowie eine dritte Messvorrichtung (16), vorzugsweise zum Messen des Drucks oder der Durchflussrate, umfasst, wobei die Regeleinrichtung (18) so ausgebildet ist, dass das erste Regelventil (11) der ersten Zulieferleitung (9) öffnet, wenn die dritte Messvorrichtung (16) misst, dass ein Großteil des aufbereiteten Sperrgases (6), vorzugsweise das gesamte, nach dem zumindest einen Kompressor (5) über die Bypassleitung (12) auf die Saugseite des zumindest einen Kompressor (5) zurückgeführt wird.

15. Vorrichtung zur Abdichtung eines Reduktionsaggregats (3) nach einem der vorhergehenden Ansprüche, **dadurch gekennzeichnet, dass** der zumindest eine Stickstoffgenerator (8) ein zweites Regelventil (15) umfasst und wobei die Regeleinrichtung (18) so ausgebildet ist, dass das zweite Regelventil (15) die Liefermenge an reinem Sperrgas (7) bei Öffnen des ersten Regelventils (11) in der ersten Zulieferleitung (9) konstant weiter bei der maximalen Kapazität des zumindest einen Stickstoffgenerators (8) hält.

16. Vorrichtung zur Abdichtung eines Reduktionsaggregats (3) nach einem der Ansprüche 12 bis 15, **dadurch gekennzeichnet, dass** der zumindest eine Stickstoffgenerator (8) weiters eine zweite Messvorrichtung (17) zum Messen von Druck umfasst, wobei die Regeleinrichtung (18) so ausgebildet ist, dass die Liefermenge an reinem Sperrgas (7) des zumindest einen Stickstoffgenerators (8) auf eine voreingestellte maximale Kapazität beschränkt wird, wenn die erste oder die zweite Messvorrichtung (17) einen Abfall des Drucks und/oder einen Anstieg der Durchflussrate misst.

17. Vorrichtung zur Abdichtung eines Reduktionsaggregats (3) nach einem der vorhergehenden Ansprüche, **dadurch gekennzeichnet, dass** es sich bei dem Reduktionsaggregat (3) um eine Direktreduktionsanlage zur Direktreduktion von metalloxidhältigen, bevorzugt eisenoxidhältigen, Einsatzstoffen, zu metallisiertem Material durch Kontakt mit heißem Reduktionsgas handelt.

18. Computerprogammprodukt, das bei seinem Laden und Ausführen auf einem Computer einer Regeleinrichtung (18) einen Verfahrensablauf nach einem der Ansprüche 1 bis 9 bewirkt.
